# EUROPÄISCHE PATENTSCHRIFT

(11) **EP 2 379 882 B1**
(45) Veröffentlichungstag und Bekanntmachung des Hinweises auf die Patenterteilung: **14.09.2016**
(21) Anmeldenummer: 09759685.2
(22) Anmeldetag: 26.11.2009
(51) Int. Cl.: F03D 9/00

(54) **STRÖMUNGSKRAFTANLAGE**
TURBINE POWER PLANT
INSTALLATION EXPLOITANT UNE FORCE DE FLUX

(30) Priorität: 19.12.2008 DE 102008063873; 26.01.2009 DE 102009008340
(43) Veröffentlichungstag der Anmeldung: 26.10.2011
(73) Patentinhaber: ZF Friedrichshafen AG, 88046 Friedrichshafen (DE)
(72) Erfinder: TENBERGE, Heinz-Josef, 58452 Witten (DE); VATH, Andreas, 63849 Leidersbach (DE)
(86) Internationale Anmeldenummer: PCT/EP2009/008414
(87) Internationale Veröffentlichungsnummer: WO 2010/078886

(56) Entgegenhaltungen:
- EP-A2- 1 045 140
- EP-A2- 1 243 791
- EP-A2- 1 251 306
- WO-A1-02/097265
- US-A- 2 655 604

## Beschreibung

Die vorliegende Erfindung bezieht sich auf eine Strömungskraftanlage zur Umwandlung von mechanischer Energie in eine andere Energieform vorzugsweise elektrische Energie. Die Erfindung wird unter Bezugnahme auf eine Windenergieanlage beschrieben, welche die Energie einer Luftströmung in elektrische Energie umwandelt. Es wird jedoch darauf hingewiesen, dass die Erfindung auch bei anderen Arten von Energiewandlern oder Kraftwerken beispielsweise Wellen- oder Gezeiten-, Wasserkraftwerken eingesetzt werden kann.

Bekannt sind Windenergieanlagen, bei denen auf einem Turm eine Gondel drehbar gelagert ist. Eine stabiler Trägerplatte bzw. ein Trägerrahmen nimmt die einzelnen Komponenten des Antriebsstrangs - z.B. Rotorlager, Rotorwelle, Getriebe, Generator - auf und überträgt deren statische und dynamische Lasten auf den Turm. Die Trägerplatte bildet gleichzeitig den unteren Teil der Gondel, welche den Antriebsstrang in Form eines Schutzgehäuses umgibt. Wie gesagt ist die Trägerplatte sehr stabil ausgelegt, da sie bei Anlagenleistungen im Megawattbereich z.B. ein Rotormoment in der Größenordnung von 100.000 Nm bzw. darüber abstützen muss. Diese Bauweise unter Verwendung einer Trägerplatte ist z.B. in der DE 1184567 A2 oder der EP 1 251 306 A2 dargestellt. L-förmige Trägerrahmen sind z.B. in der DE 29609794 U1 dargestellt.

Nachteilig sind das hohe Gewicht der Trägerplatte und der hohe Platzbedarf in der Gondel, welcher sich bei der beschriebenen aufgelösten Bauweise des Antriebsstrangs einstellt.

Es bestehen Ansätze Getriebe und Generator in einem gemeinsamen Gehäuse zu integrieren, wie in der DE 10 2004 046 563 B4 oder der DE 10 242 707 B3 dargestellt wird. Außerdem werden teilweise Getriebe und das Rotorlager zu einer baulichen Einheit zusammengefasst, so in der EP 11 84 567A2 oder der WO 1996/011338 A1.

Nachteilig an solchen Konzepten ist jedoch der erhöhte Wartungsaufwand, der z.B. im Falle des Austausches einer integrierten Teilkomponente entsteht.

Die EP 1 046 140 A2 zeigt eine Windenergieanlage, bei der am Azimuthlager des Turms ein Fuß ausgebildet ist. An diesem Fuß sind ein Generator oder ein Getriebe montiert. Weitere Komponenten, wie Lager, Getriebe oder Generator sind an dem am Fuß montierten Bauteil befestigt.

Die EP 1 243 791 A2 zeigt eine Windenergieanlage mit einem Maschinenrahmen, an den Lager oder Getriebekomponenten befestigt sind. Ein Generator ist an die Getriebekomponenten angeflanscht.

Die US 2 655 604 A zeigt eine Windkraftanlage bei der ein Gehäuse eines Getriebes mit einem Fortsatz versehen ist, der ein Azimuthlager aufnimmt. An das Getriebegehäuse ist ein Generator angeflanscht.

Es ist die Aufgabe der vorliegenden Erfindung eine unter Anderem hinsichtlich Materialaufwand und Wartungsfreundlichkeit verbesserte Strömungskraftanlage anzugeben.

Diese Aufgabe wird durch eine Strömungskraftanlage gemäß den Merkmalen des Patentanspruchs 1 gelöst.

Die erfindungsgemäße Strömungskraftanlage zur Erzeugung elektrischer Energie aus einer Fluidströmung, d.h. einer Gasströmung oder Flüssigkeitsströmung, besitzt eine auf einem Sockel, insbesondere einem Turm, drehbar befestigte Gondel, welche einen Antriebsstrang umfasst, der mittels eines Rotors, welcher von der Fluidströmung angetrieben wird, und der mittels Funktionskomponenten, die zur Lagerung des Rotors und/oder zur Lagerung des Getriebes und/oder zur Energieumwandlung ausgebildet sind, die am Rotor eingetragene Energie der Fluidströmung in elektrische Energie wandelt.

Die Besonderheit ist, dass wenigstens eine der besagten Funktionskomponenten eine betriebsfeste Anbindung für die Übertragung statischer und dynamischer Lasten aus dem Antriebsstrang zum Turm darstellt.

Damit erhält eine ohnehin benötigte Struktur eine Doppelfunktion: Es dient also z.B. eine Funktionskomponente wie z.B. ein Getriebe - bzw. dessen Gehäuse - sowohl als Funktionskomponente als auch als tragendes Element zur Krafteinleitung bzw. Kraftübertragung von statischen und dynamischen Lasten direkt in den Turm. Eine eventuell erforderliche Gondelstruktur kann aufgrund der Nutzung der Gehäusestruktur einer Funktionskomponente bzw. deren Masse leichter ausgeführt werden. Es sinkt das Gewicht von Turmkopf bzw. Gondel, oder man erhält bei vergleichbarer Masse eine stabilere Gondel. Die herkömmliche Trägerplatte bzw. der herkömmliche Trägerrahmen können entfallen oder wesentlichen leichter dimensioniert werden.

Erfindungsgemäß ist ein Tragring eines Azimuthlagers mit einer Art Aufnahmeschale versehen, welche zumindest das statische Gewicht der einzelnen Funktionskomponenten tragen kann. Die Aufnahmeschale erleichtert dabei im Wartungs- und Montagefall die vorläufige Anordnung und Positionierung der Funktionskomponenten.

Bei großen Windkraftanlagen übersteigen die dynamischen Lasten aus dem Winddruck, dem abzustützenden Rotordrehmoment, der Schublast, etc. die statischen, massebedingten Lasten bei Weitem. Sämtliche Tragelemente, Trägerplatten etc. sind bei herkömmlicher Bauweise sehr stark dimensioniert. Die Funktionskomponenten, wie z.B. Lager oder Getriebe müssen jedoch ebenfalls Belastungen in der gleichen Größenordnung standhalten. Die Nutzung der Struktur von Funktionskomponenten zum Abtragen bzw. Ankoppeln von dynamischen Lasten an den Turm verhilft zu einer wesentlich leichteren Bauweise, da weniger Material im Kraftpfad zwischen der Funktionskomponente und dem Turm angeordnet ist.

Weitere vorteilhafte Ausbildungen der vorliegenden Erfindung sind Gegenstand der Unteransprüche.

Gemäß einer Weiterbildung der Erfindung wird die wenigstens eine Funktionskomponente an einer Tragringstruktur eines Azimutlagers befestigt. Insbesondere können die Funktionskomponenten, an denen die höchsten, insbesondere dynamischen Lasten abzustützen sind, z.B. das Rotorlager welches vorwiegend die Schublast des Rotors trägt, und das Getriebe an welchem der Hauptteil des Rotordrehmoments abgestützt ist, an der Tragringstruktur des Azimutlagers befestigt werden. Die Tragringstruktur ist als Teil des Azimutlagers zu sehen, und geht in ihrem radialen Umfang nicht wesentlich über das Lager hinaus. Sie besitzt auch nicht die sich über die gesamte Gondel erstreckende, insbesondere horizontal langgestreckte Ausdehnung, welche eine herkömmliche Trägerplatte zur Aufnahme aller Funktionskomponenten des Antriebsstrangs besitzt.

Vorzugsweise dienen die Gehäuse der Funktionskomponenten zum Abstützen der Lasten am Turm. Weitere Material- und Gewichtseinsparungen lassen sich erzielen, wenn an das Gehäuse einer solchen Funktionskomponenten eine weitere Funktionskomponenten angebaut ist, so dass deren Last ebenfalls über das besagte Gehäuse am Turm abgestützt wird.

An einem sich am Turm abstützenden Gehäuse kann zudem ein vergleichsweise leichter Tragrahmen zur Aufnahme von Zusatzkomponenten, z.B. ein Frequenzumrichter, ein Transformators, ein Brandschutzanlage, eine Steuerungselektronik, eine Notenergiequelle, ein Kühlsystem oder ein Luftaufbereitungssystem, angebracht werden.

Bei wetterfester Ausbildung der Funktionskomponenten kann auf ein eigenes Schutzgehäuse der Gondel verzichtet werden.

In einem Vorsatzlager kann ein Ringgenerator angeordnet sein, der zum Einen sein Drehmoment selbst oder über das Vorsatzlager am Turm abstützt, und der zum Anderen einen Teil der Last bzw. Leistungsspitzen bereits an der Eingangsseite des Antriebsstrangs aufnimmt bzw. abdämpft. Damit werden stromabwärts angeordnete Funktionskomponenten des Antriebsstrangs, wie Getriebe oder Generator entlastet und können ggf. auf geringere Überlast dimensioniert werden. Dieser Gegenstand wird in Verbindung mit einer Windenergieanlage auch ohne die Einschränkung der Nutzung einer Funktionskomponente als Lastanbindung an den Turm als eigenständige Erfindung angesehen.

Vorteilhaft erscheint die Kombination eines Getriebes mit hoher Getriebeübersetzung, z.B. 1:60 bis 1:140 mit einem Asynchrongenerator. Der Generator könnte erfindungsgemäß z.B. ohne Verwendung einer Trägerplatte am Getriebegehäuse befestigt werden. Das im Vergleich zum Getriebe recht geringe am Generator angreifende und am Getriebegehäuse in diesem Fall abgestützte Drehmoment erfordert keine nennenswerte Gewichtserhöhung des Generatorgehäuses. Anstelle eines Asynchrongenerators kann hierbei auch ein Synchrongenerator zum Einsatz kommen.

Weitere vorteilhafte Kombinationen von Funktionskomponenten sind Getriebe mit niedrigen bis mittleren Übersetzungsverhältnissen und Synchrongeneratoren. Bei den eher klein bauenden Getrieben fällt zwar eine Dimensionsvergrößerung z.B. aufgrund einer Anbindung des Generators stärker ins Gewicht. Der Wegfall einer zusätzlichen Trägerplatte ergibt aber in jedem Fall eine Gewichtsreduzierung.

Nachfolgend werden die vorliegende Erfindung und deren Vorteile unter Bezugnahme auf die in den Figuren dargestellten Ausführungsbeispiele näher erläutert.
- Figur 1: ist eine schematische Abbildung eines Turmkopfabschnitts einer Windenergieanlage, bei der ein 2-Punkt Rotorlager am Azimutlager der Gondel bzw. des Antriebsstrangs angebunden ist,
- Figur 2: ist eine schematische Abbildung eines Turmkopfabschnitts einer Windenergieanlage, bei der vor dem Getriebe ein Momentenlager angeordnet ist, und sowohl das Lager als auch das Getriebe am Azimutlager der Gondel bzw. des Antriebsstrangs angebunden sind,
- Figur 3: ist eine schematische Abbildung eines Turmkopfabschnitts einer Windenergieanlage, bei der der Generator an dem Getriebe befestigt ist und dieses radial zumindest auf einem axialen Teilabschnitt umgreift,
- Figur 4: ist eine schematische Abbildung eines Turmkopfabschnitts einer Windenergieanlage, bei der in einem Lager des Rotors ein getriebelos mit der Rotorwelle gekoppelter Generator vorgesehen ist,
- Figur 5: ist eine schematische Abbildung eines Turmkopfabschnitts einer Windenergieanlage, bei der ein Übersetzungsgetriebe in eine Hohlwelle des Rotors des Generators integriert ist, wobei sich der unbewegliche Teil des Getriebes am Gehäuse oder Stator des Generators abstützt,
- Figur 6a: ist eine schematische Seitenansicht eines Turmkopfabschnitts einer Windenergieanlage, bei der eine Aufnahmeschale für Funktionskomponenten des Antriebsstrangs vorhanden ist, und
- Figur 6b: entspricht einer Rückansicht des in Figur 6a abgebildeten Turmköpfabschnitts.

Bei den nachfolgend beschriebenen Ausführungsbeispielen werden die Kräfte und Momente, die durch den Wind und auch die Rückwirkung des elektrischen Netzes kommen, über das Rotorlager und das Azimutlager bzw. über das Getriebe und das Azimutlager direkt in den Turm eingeleitet. Der Vorteil dabei ist unter Anderem, dass z.B. die Lageraufnahme bzw. die Lagerschale des Rotorlagers ein Teil der Gondel ist und daher die Gondelstruktur vereinfacht bzw. auf eine zusätzliche Gondelstruktur - z.B. eine schwere Bodenplatte - teilweise oder komplett verzichtet werden kann. Ist die Lageraufnahme Teil der Gehäusestruktur, so kann diese Lageraufnahme bzw. das Lager selbst zweckmäßigerweise so konstruiert werden, dass dieses mit möglichst wenig Materialeinsatz eine ausreichend hohe Steifigkeit besitzt. Dies könnte durch eine Zylinderstruktur oder ähnliches der Lagerschale bzw. des Lagers erreicht werden, wodurch dieses ein sehr hohes Flächenträgheitsmoment erhält.

Eine mögliche Ausführung des Lagers der Hauptwelle ist ein 2 Punktlager, um Biegemomente und Achsversatz im Getriebe auf ein Minimum zu reduzieren. Als weitere Ausführung des Lagers können Momentenlager oder auch andere Bauformen verwendet werden.

Direkt an die Lagerstruktur des Hauptwellenlagers kann das Getriebe angekoppelt werden. Dabei sollte ein Achsversatz vermieden werden. Für das Getriebe, sind unter anderem die folgenden Ausführungen denkbar:
1. Maschinenelemente zur Wandlung von Drehmomenten u. Drehzahlen im weiteren Sinne ausgeführt als Getriebe mit konstanter oder variabeler Übersetzung aller physikalischer Wirkprinzipien z. B.
2. ein- und mehrstufige Stirnradgetriebe
3. ein- und mehrstufige Planetengetriebe
4. Kombinationen aus 2 und 3
5. Überlagerungsgetriebe und deren Derivate
6. Kombinationen aus 2, 3, 5
7. Kegelradgetriebe und deren Derivate
8. Kombinationen aus 2, 3, 5 und 7
9. Umschlingungsgetriebe
10. Kombinationen aus 2, 3, 5, 7 und 9
11. hydrostatische und hydrodynamische Getriebe
12. Kombinationen aus 2, 3, 5, 9, 11
13. Koppelgetriebe
14. Kombinationen aus 2, 3, 5, 11, 13,
15. Umlaufgetriebe
16. Kombinationen aus 2, 3, 5, 7, 9, 11, 13,15
17. elektrische Getriebe als Motor-Generator
18. Kombinationen aus 2, 3, 5, 7, 9, 11, 11, 13, 15, 17

Die Ankopplung des Generators kann je nach Getriebe- und Generatorvariante unterschiedlich sein. Bei einer Ausführung des Getriebes mit nur wenigen Stufen bzw. einer kurzen Bauweise mit bzw. ohne Achsversatz kann der Generator als Synchrongenerator, Asynchrongenerator, oder Switch-Reluktanz-Generator ausgeführt sein. Dabei sind folgende Bauformen für Generatoren denkbar:
a) für Synchrongenerator
   1. Synchrongenerator mit Fremderregung
   2. Synchrongenerator mit Permanentmagneten bzw. magnetischer Erregung
   3. Kombination aus 1 und 2
   4. Synchrongenerator ausgeführt mit Supraleitern
   5. Synchrongenerator nach 1 bis 4, der das Getriebe ganz oder teilweise umschließt
   6. Synchrongenerator nach 1 bis 4, der ganz oder teilweise in das Getriebe integriert ist
   7. Synchrongenerator nach 1 bis 4, der direkt oder über eine Kupplung an das Getriebe angekoppelt ist
   8. Synchrongenerator nach 1-7, der auch als Transversalflussmaschine ausgeführt ist
   9. Synchrongenerator nach 1-7, der sowohl als Außenläufer als auch Innenläufer ausgeführt sein kann
b) für Asynchrongenerator
   1. Asynchrongenerator als Käfigläufer ausgeführt
   2. Asynchrongenerator mit einer Wicklung im Rotor als Schleifringläufer ausgeführt für eine möglich Speisung des Läuferkreises mit Strom und oder Spannung
c) weitere Generatortypen
   1. Switch-Reluktanz Generator in den verschiedensten Ausführungsformen

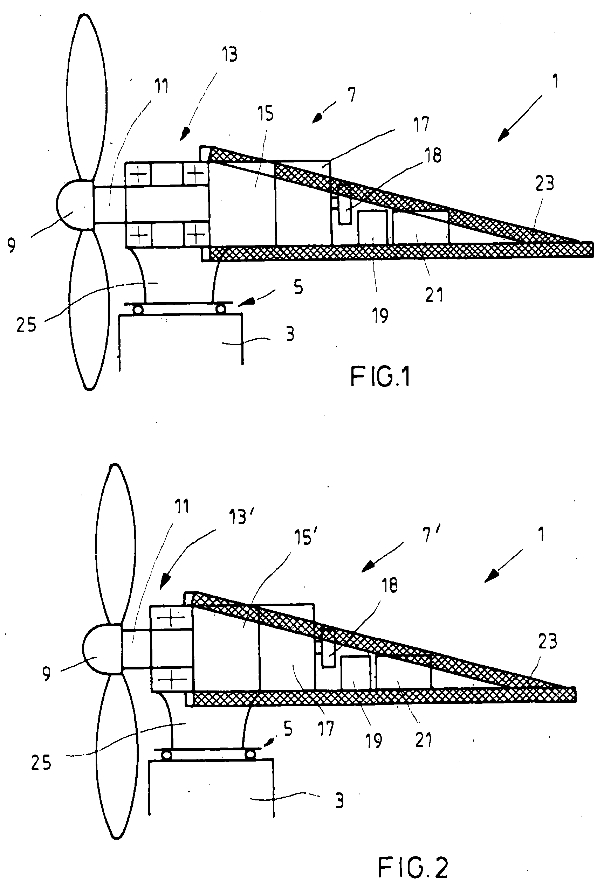

Ein erstes Ausführungsbeispiel ist in der Figur 1 darstellt. Der Turmkopfabschnitt einer Windenergieanlage 1 umfasst unter anderem am oberen Turmabschnitt 3 ein Azimutlager 5 über welches die Gondel 7 bzw. der Antriebsstrang drehbar am Turmabschnitt 3 gelagert ist. Der Begriff Gondel 7 soll sich mit Ausnahme des Rotors 9 auf alle turmabseits des Azimutlagers 5 angeordneten Komponenten

Der von der Gondel 7 umfasste Abtriebsstrang umfasst als Funktionskomponenten, einen Rotor 9 mit ggf. im Pitchwinkel einstellbaren Rotorblättern, eine Rotorwelle 11, welche in einem Rotorlager 13 drehbar gelagert ist, ein Übersetzungsgetriebe 15, ein dem Übersetzungsgetriebe 15 nach geschalteter Generator 17, sowie weitere Hilfskomponenten wie ein Frequenzumrichter 19 zur Steuerung des Generators 17 und der Einspeisung, Bremsaggregate, eine Hydraulikanlage, und eine übergeordnete Steuerelektronik 21, welche die Windenergieanlage 1 steuert.

Das Rotorlager 13 ist an einem Tragring 25 des Azimutlagers 5 befestigt. Es überträgt vor Allem Schub- und Torsionslasten sowie auch statische Gewichtskräfte auf den Tragring 25 und somit auf den Turm. An das Rotorlager 13 bzw. dessen Gehäuse ist das Getriebe 15 angeflanscht. Zudem stützt sich das Getriebe 15 am Tragring 25 ab, wodurch die hohen am Getriebe 15 angreifenden Drehmomente in den Turm eingeleitet werden. Der Generator 17 ist am Getriebegehäuse angeflanscht. Dieses hält im Allgemeinen dem geringen am Generator auftretenden Drehmoment ohne zusätzliche Aufdimensionierung stand. Am Gehäuse des Rotorlagers 13, am Getriebegehäuse oder an dem Tragring 25 kann eine gerüstartige Trägerstruktur 23 angebracht sein, welche eine leichte Montageplattform für die Hilfskomponenten 19 und 21 zur Verfügung stellt.

Die Rotorwelle 11 ist im Rotorlager 13 an zwei Stellen gelagert. Durch die Zweipunkt-Lagerung können zumindest die statischen Lasten von Rotor 9 und Rotorwelle 11 im Rotorlager 13 abgestützt werden, so dass andere Komponenten, wie das Getriebe einfach austauschbar sind.

Die Integration der Lager geschieht in oder an einer Struktur - siehe auch "Gehäuse des Rotorlagers 13" - mit möglichst hohem Flächenträgheitsmoment um mit wenig Materialeinsatz eine ausreichende Steifigkeit zu erreichen. Die verwendeten Lager können als Kugel-, Zylinder- oder Kegelrollenlager sowie als Gleitlager ausgeführt sein. Bei dieser Art der Lagerung, werden die Biegebelastungen der Rotorwelle, die durch die Windkräfte verursacht werden größtenteils nicht in das Getriebe geleitet, was für die Konstruktion von diesem deutliche Vorteile bringt.

Die Verbindung des Getriebegehäuses mit der Struktur der Lagerung von Rotorwelle 11 kann über Schrauben, Bolzen und sonstigen Elementen erfolgen, die in der Lage sind die entsprechenden Kräfte und Momente zu übertragen. Die Verbindung der Rotorwelle mit der Getriebeeingangswelle kann mit Hilfe verschiedener Kupplungen (starr oder elastisch z. B mit Bogenzahnkupplungen) erfolgen. An der Ausgangswelle kann die Generatorwelle entweder direkt oder über eine starre oder elastische, ggf. drehschwingungsdämpfende Kupplung angebracht sein. Auch kann das Gehäuse des Generators hier direkt mit dem Getriebegehäuse verbunden sein. Diese Verbindungen haben die Aufgabe die auftretenden Kräfte und Momente zwischen dem Getriebe und Generator zu übernehmen. Die Welle des Generators kann so ausgeführt sein, dass auf dieser die Betriebs- und oder Haltebremse 18 bzw. das Bremssystem angebracht ist. Für die Abstützung der Gewichtskraft ist es denkbar, dass das Getriebe und/oder der Generator sich noch auf einer zusätzlich anzubringenden Tragstruktur abstützen. Die betriebsfeste Verbindung des Lagergehäuses, des Getriebe und des Generators sowie deren Anbindung kann durch die beschriebenen Axialverbindungen realisiert werden.

Für die Zusatzkomponenten, die in einer WEA benötigt werden kann wie gesagt seitlich und/oder hinter dem Antriebsstrang bestehend aus Lagerung, Getriebe, Generator und Bremssystem 18 noch die Trägerstruktur 23 angebracht sein. Diese stützt sich so an einem oder mehreren Bauteilen des Antriebsstrangs ab. Eine mögliche Ausführungsform dieser Abstützung ist in Abbildung 1 zu sehen.

Eine mögliche Modifikation der dargelegten Ausführungsform ist, dass die Betriebsund oder Haltebremse bzw. das Bremssystem zwischen Getriebe und Generator angebracht ist. ,

Ein zweites Ausführungsbeispiel ist in der Figur 2 darstellt. Die Windenergieanlage 1 gemäß dem zweiten Ausführungsbeispiel entspricht weitestgehend der Windenergieanlage 1 gemäß dem ersten Ausführungsbeispiel. Die nachfolgend beschriebenen Abwandlungen gegenüber dem ersten Ausführungsbeispiel betreffen vor Allem den mechanischen Aufbau und die Anbindung der Komponenten des Antriebsstrangs der Gondel 7' gegenüber der Gondel 7.

Anstelle eines Rotorlagers 13 mit zwei axial beabstandeten Lagerstellen ist ein Momentenlager 13' vorgesehen, in welchem die Rotorwelle 11 in einer Lagerstelle abgestützt ist. Das Momentenlager 13' stützt auch Kippmomente der Rotorwelle 11 ab. Das Momentenlager 13' ist am Tragring 25 befestigt. Das Getriebe 15' ist ebenfalls am Tragring 25 befestigt. Es ist vorzugsweise gegenüber Kippbewegungen der Rotorwelle 11 entkoppelt, z.b. durch eine kardanische Anbindung zwischen Rotorwelle 11 und Eingangswelle des Getriebes 15'. Zudem sind das Momentenlager 13' und das Getriebe 15' untereinander befestigt.

An das Gehäuse des Getriebes ist wiederum der Generator 17 angeflanscht. Die Befestigung der weiteren Komponenten entspricht der im ersten Ausführungsbeispiel gezeigten.

Durch die veränderte Lagerung der Rotorwelle 11 wird im Vergleich zum ersten Ausführungsbeispiel die Baulänge des Antriebsstrangs verkürzt. Dadurch wird insgesamt eine kompaktere und leichtere Gondel erhalten.

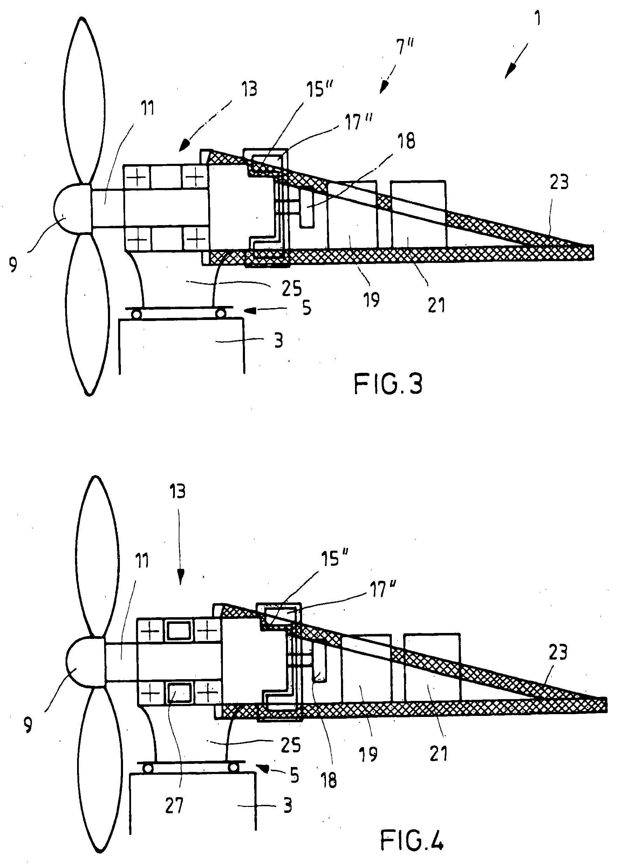

Ein drittes Ausführungsbeispiel ist in der Figur 3 darstellt. Die Windenergieanlage 1 gemäß dem dritten Ausführungsbeispiel entspricht weitestgehend der Windenergieanlage 1 gemäß dem ersten Ausführungsbeispiel. Die nachfolgend beschriebenen Abwandlungen gegenüber dem ersten Ausführungsbeispiel betreffen vor Allem den mechanischen Aufbau und die Anbindung der Komponenten des Antriebsstrangs der Gondel 7" gegenüber der Gondel 7.

Die Rotorwelle 11 ist in dem Lager 13 an zwei axial beabstandeten Lagerstellen abgestützt. Das Lager 13 ist am Tragring 25 befestigt. An das Lager 13 schließt ein Getriebe 15" an welches einerseits mit dem Tragring 25 und andererseits mit einer Gehäusestruktur des Lagers 13 verbunden ist, vergleichbar dem ersten Ausführungsbeispiel. Der Generator 17" ist an das Getriebe 15" bzw. dessen Gehäuse angesetzt, wobei der Stator des Generators 17" mit dem Getriebegehäuse mechanisch verbunden ist. Der Generator 17" ist als Ringgenerator ausgebildet. Der freie Innenraum des Generators 17" nimmt einen Abschnitt des Getriebes 17" auf. Dadurch kann die Baulänge des Abtriebsstrangs bzw. der Gondel 7" verkürzt werden. Um eine aufwendige Kontaktierung des Rotors des Generators 17" zu vermeiden, könnte dieser permanent erregt ausgeführt sein. Es sind jedoch auch hybriderregte oder fremderregte Generatörbauformen in Ringstruktur möglich.

Die Figur 4 dient zur Erläuterung eines vierten Ausführungsbeispiels, welches eine geringe Abwandlung des dritten Ausführungsbeispiels ist. Gemäß dem vierten Ausführungsbeispiel ist in dem Lager 13 zwischen den beiden Lagerstellen ein direkt von der Rotorwelle 11 angetriebener Generator 27 vorgesehen. Der Generator 27 wandelt einen Teil der am Rotor 9 eingetragenen mechanischen Energie direkt in elektrische Energie. Nur die am Generator 27 nicht abgenommene Energie wird in das Getriebe 15"eingeleitet. Das Getriebe 15" muss auch nur ein geringeres Reaktionsdrehmoment abstützen, da ein Teil des am Rotor 9 anliegenden Drehmoments schon durch den Generator 27 abgeleitet wird.

Zur Wirkungsgradsteigerung kann es Sinnvoll sein, das Getriebe 15" im Teillastbereich von dem Generator 27 abzukuppeln, um die Verluste im Getriebe 15" bei kleinen Leistungen zu vermeiden und die Lebensdauer des Getriebes 15" zu erhöhen. Ein weiterer Vorteil dieser Anordnung liegt in der Möglichkeit der Dämpfung der Triebstrangschwingungen direkt an der Rotorwelle 11 durch den vor gelagerten Generator 27 mit Hilfe einer geeigneten Regelung. Zusätzlich sind mit dem Generator 27 und dem Generator 17" zwei unabhängige Systeme der Energiewandlung vorhanden, was zum Vorteil hat, dass bei Ausfall eines Systems die Anlage mit verringerte Leistung weiterbetrieben werden kann.

Selbstverständlich sind auch das erste und das zweite Ausführungsbeispiel im Sinne des vierten Ausführungsbeispiels abwandelbar, d.h. auch bei den Gondeln 7 und 7' lässt sich ein direkt von der Rotorwelle 11 angetriebener Generator mit dem Lager 13 oder 13' integrieren.

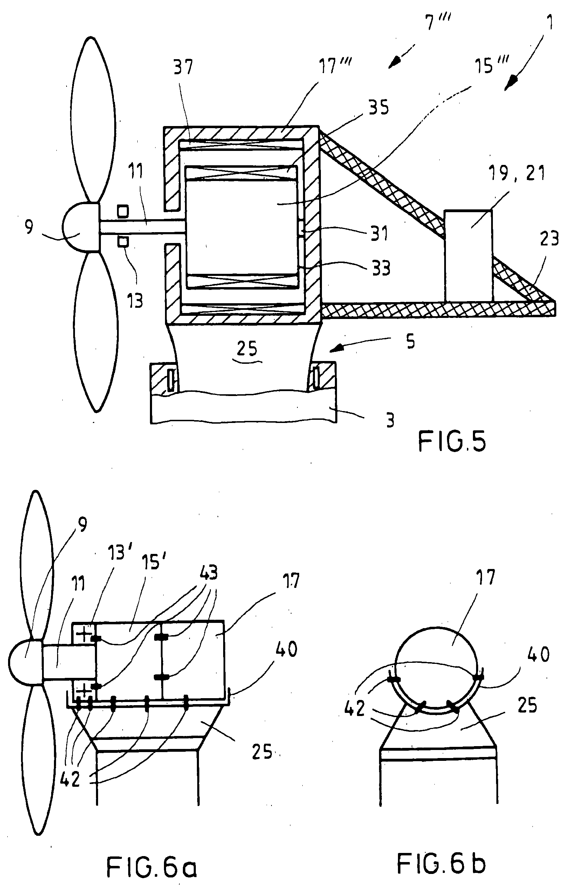

Die Figur 5 dient zur Erläuterung eines fünften Ausführungsbeispiels. Das fünfte Ausführungsbeispiel stelle eine weitere Variante zu den vorangehend beschriebenen Ausführungsbeispielen dar. Bei der Gondel 7'" einer Windenergieanlage 1 ist das Getriebe 15"' in das Gehäuse eines Generators 17"' vollständig integriert, d.h. das Gehäuse des Generators 17"' umgibt das Getriebe 15'" radial und axial. Der Generator 17'" ist mit seinem Gehäuse am Tragring 25 des Azimutlagers 5 befestigt. Innerhalb des Generatorgehäuses ist eine feststehende Komponente des Getriebes 15'" mittels einer Welle 31 oder ggf. über eine Hohlwelle am Generatorgehäuse befestigt. Über die feststehende Welle 31 stützt sich das Reaktionsmoment des Getriebes 15'" am Generatorgehäuse und somit am Tragring 25 ab. Die Abstützung der feststehenden Komponente des Getriebes kann jedoch auch über mehrere Verbindungszapfen zum Generatorgehäuse erfolgen. Bei dem Getriebe 15'" handelt es sich z.B. um ein einstufiges Planetengetriebe, welches zur Übersetzung der Drehzahl der Rotorwelle 11 mit dem Faktor 6 bis 60 ausgelegt ist. Dabei besitzt das Getriebe 15'" eine gehäuseärtige bzw. glockenartige Umhüllung 33, welche den Rotor 35 des Generators 17"' trägt bzw. die Funktion des Rotors 35 besitzt. Der Stator 37 des Generators 17'" ist im Generatorgehäuse angeordnet. Gleichzeitig kann das Generatorgehäuse als Gondelgehäuse oder als Teil des Gondelgehäuses dienen und so einen Wetterschutz der im Getriebegehäuse angeordneten Komponenten gewährleisten. Alternativ kann das Getriebe 15"' als mehrstufiges Planetengetriebe ausgeführt sein.

Weiter ist es bei allen Ausführungsformen denkbar, dass der Tragring 25 mit einer Art Aufnahmeschale versehen ist, welche zumindest das statische Gewicht der einzelnen Funktionskomponenten tragen kann. Diese Weiterbildung der vorbeschriebenen Ausführungsformen ist in den Figuren 6a und 6b für das zweite Ausführungsbeispiel dargestellt. In die Aufnahmeschale 40 sind ein Momentenlager 13' sowie ein Getriebe 15' eingesetzt. Auf das Getriebe folgt der Generator 17. In der Aufnahmeschale können auch die Hilfskomponenten wie ein Frequenzumrichter 19 zur Steuerung des Generators 17 und der Einspeisung, Bremsaggregate, eine Hydraulikanlage, und eine übergeordnete Steuerelektronik 21 angeordnet sein. Durch zusätzliche Befestigungsmittel 42, z.B. Bolzen, Stützen, Schrauben, etc. erfolgt nach Einlegen der Funktionskomponenten in diese Aufnahmeschale 40 eine Verbindung mit der Aufnahmeschale 40 selbst und mit dem Tragring 25. Außerdem werden die Funktionskomponenten durch Befestigungsmittel 43 untereinander befestigt. Insgesamt entsteht nach Anbringen der besagten Befestigungsmittel 42 bzw. 43 eine stabile, insbesondere den in der Windenergieanlage üblichen dynamischen Belastungen standhaltende Einheit zwischen Funktionskomponenten 13', 15', 17, Aufnahmeschale 40 und Tragring 25. Die Aufnahmeschale 40 erleichtert dabei im Wartungs- und Montagefall die vorläufige Anordnung und Positionierung der Funktionskomponenten 13', 15' und 17. Da am Generator 17 nur geringe Lasten auftreten, ist es ggf. ausreichend, diesen nur an der Aufnahmeschale 40 und ggf. am Getriebe 15' zu befestigen. Die Aufnahmeschale 40 lässt sich wie gesagt bei allen zuvor beschriebenen Ausführungsbeispielen 1 bis 5 zur Aufnahme der Funktionskomponenten ergänzen.

Die vorangegangene Beschreibung und die Figuren dienen lediglich dem besseren Verständnis der vorliegenden Erfindung, sie schränken die Erfindung nicht etwa auf die Ausführungsbeispiele oder die beschriebenen Varianten ein. Die Figuren sind teilweise grob schematisch gehalten, um die Funktionsweisen, Wirkprinzipien, technischen Ausgestaltungen und Merkmale zu verdeutlichen. Grundsätzlich kann jede Funktionsweise, jedes Prinzip, jede technische Ausgestaltung und jedes Merkmal, welches/welche in den Figuren oder im Text gezeigt ist/sind, mit allen Ansprüchen, jedem Merkmal im Text und in den anderen Figuren, anderen Funktonsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen dem Offenbarungsumfang der Erfindung hinzuzurechnen sind. Dabei sind auch Kombinationen zwischen allen einzelnen Ausführungen im Text, d.h. in jedem Abschnitt des Beschreibungstexts, in den Ansprüchen und auch Kombinationen zwischen verschiedenen Ausführungsbeispielen im Text, in den Ansprüchen und in den Figuren umfasst.

Auch die Ansprüche begrenzen bzw. limitieren nicht die Offenbarung und damit die Kombinationsmöglichkeiten aller aufgezeigten Merkmale untereinander. Alle aufgezeigten Merkmale sind explizit auch einzeln und in Kombination mit allen anderen Merkmalen der Erfindung von dieser Offenbarung umfasst.

### Bezugszeichen

- 1: Windenergieanlage
- 3: Turmkopfabschnitt
- 5: Azimutlager
- 7: Gondel
- 7': Gondel
- 9: Rotor
- 11: Rotorwelle
- 13: Rotorlager
- 13': Momentenlager
- 15: Übersetzungsgetriebe
- 15': Übersetzungsgetriebe
- 15": Übersetzungsgetriebe
- 15'": Übersetzungsgetriebe
- 17: Generator
- 17": Ringgenerator
- 17'": Generator
- 18: Bremssystem
- 19: Frequenzumrichter
- 21: Steuerelektronik
- 23: Trägerstruktur
- 25: Tragring
- 27: Direkt angetriebener Generator
- 31: feststehende Welle
- 33: Umhüllung
- 35: Rotor des Generators
- 37: Stator
- 40: Aufnahmeschale
- 42: Befestigungsmittel
- 43: Befestigungsmittel

## Patentansprüche

1. Strömungskraftanlage der Megawatt-Klasse, insbesondere Windkraftanlage oder Meeresströmungskraftwerk, zur Erzeugung elektrischer Energie aus einer Fluidströmung, mit einer auf einem Sockel, insbesondere einem Turm (3), drehbar befestigten Gondel, welche einen Antriebsstrang (7) umfasst, der mittels eines Rotors (9), der von der Fluidströmung angetrieben wird, und der mittels Funktionskomponenten, die als Lager (13, 13') des Rotors (9) bzw. einer Rotorwelle (11) und/oder als Getriebe (15, 15') und/oder zur Energieumwandlung (17) ausgebildet sind, die am Rotor (9) eingetragene Energie der Fluidströmung in elektrische Energie wandelt, wobei wenigstens eine der besagten Funktionskomponenten (13, 13', 15, 15', 17) eine betriebsfeste Anbindung für die Übertragung statischer und dynamischer Lasten aus dem Antriebsstrang (7) zum Turm (3) darstellt und eine Funktionskomponente (13, 13', 15, 15', 17) auf einer Tragringstruktur (25) eines Azimutlagers (5) befestigt ist,
**dadurch gekennzeichnet, dass**
die Tragringstruktur (25) mit einer Aufnahmeschale (40) versehen ist, in welcher zumindest ein Momentenlager (13') und das Getriebe (15') als Funktionskomponenten (13, 13', 15, 15', 17) eingesetzt sind, und
dass Befestigungsmittel (43) vorgesehen sind, durch die die Funktionskomponenten (13, 13', 15, 15', 17) untereinander befestigt sind, und dass zusätzliche Befestigungsmittel (42) vorgesehen sind, durch welche die in die Aufnahmeschale (40) eingesetzten Funktionskomponenten (13', 15') mit der Aufnahmeschale (40) selbst und mit dem Tragring (25) verbunden sind,
wobei durch die Befestigungsmittel (42, 43) eine stabile standhaltende Einheit zwischen den Funktionskomponenten (13, 13', 15, 15', 17), der Aufnahmeschale (40) und der Tragringstruktur (25) entsteht.

2. Strömungskraftanlage nach Anspruch 1, **dadurch gekennzeichnet, dass** in der Aufnahmeschale zumindest eine Hilfskomponente (19, 21), insbesondere ein Frequenzumrichter (19) zur Steuerung eines Generators (17) und einer Einspeisung, Bremsaggregate, eine Hydraulikanlage und/oder eine übergeordnete Steuerelektronik (21), angeordnet ist.

3. Strömungskraftanlage nach einem der vorangehenden Patentansprüchen, **dadurch gekennzeichnet, dass** die dynamischen Lasten zumindest eine der folgenden Lasten umfassen: eine Schubbelastung insbesondere eines Rotorlagers, Biegemomente eine Torsionsbelastung, ein Drehmoment um die Rotorwelle (11), insbesondere an einer Eingangsstufe eines Getriebes (15),. Vibrationsbelastungen, Trägheitsmomente, insbesondere bei Drehung der Gondel zur Änderung ihrer Azimutausrichtung.

4. Strömungskraftanlage nach einem der vorangehenden Patentansprüchen, **dadurch gekennzeichnet, dass** das Gehäuse einer Funktionskomponente (13, 15) die an dieser Funktionskomponente auftretende Last an die Tragringstruktur (25) überträgt.

5. Strömungskraftanlage nach einem der vorangehenden Patentansprüchen, **dadurch gekennzeichnet, dass** ein Gehäuse einer Funktionskomponente (13, 15) die an einer benachbarten Funktionskomponente (15, 17) auftretende Last an die Tragringstruktur (25) überträgt.

6. Strömungskraftanlage nach Anspruch 4 oder 5, **dadurch gekennzeichnet, dass** das Gehäuse wetterfest ausgebildet ist.

7. Strömungskraftanlage nach einem der vorangehenden Patentansprüchen, **dadurch gekennzeichnet, dass** am Gehäuse einer Funktionskomponente ein Rahmen (23) befestigt ist, welcher der Aufnahme von Zusatzkomponenten, insbesondere eines Frequenzumrichters (19), und/oder eines Transformators, und/oder einer Brandschutzanlage, und/oder einer Steuerungselektronik (21) und/oder einer Notenergiequelle und/oder einem Kühlsystem und/oder einem Luftaufbereitungssystem dient.

8. Strömungskraftanlage nach einem der Patentansprüche 2 bis 7, **dadurch gekennzeichnet, dass** ein Vorsatzlager (13) für den Rotor (9) bzw. die Rotorwelle (11) an der Tragringstruktur (25) des Azimutlagers (5) befestigt ist, und dass das Vorsatzlager (13) mit einem von dem Rotor (9) übersetzungslos angetriebenen Generator, insbesondere einem Ringgenerator (27) versehen ist.

9. Strömungskraftanlage nach Anspruch 8, **dadurch gekennzeichnet, dass** Steuermittel für den Ringgenerator (27) vorgesehen sind, welche eine Dämpfung von rotorseitig eingetragenen Drehmomentschwankungen bzw. Drehzahlschwankungen bewirken.

10. Strömungskraftanlage nach einem der vorangehenden Patentansprüchen, **dadurch gekennzeichnet, dass** Befestigungsmittel zur Verbindung der Gehäuse von zumindest zwei Funktionskomponenten (13, 15, 17) vorgesehen sind.

11. Strömungskraftanlage nach einem der vorangehenden Patentansprüchen, **dadurch gekennzeichnet, dass** die Funktionskomponenten ein Übersetzungsgetriebe (15, 15', 15", 15"') mit einem Übersetzungsverhältnis von 1:3 bis 1:10, insbesondere 1:5 oder 1:8 umfassen.

12. Strömungskraftanlage nach einem der vorangehenden Patentansprüchen, **dadurch gekennzeichnet, dass** die Funktionskomponenten ein Übersetzungsgetriebe (15, 15', 15", 15'") mit einem Übersetzungsverhältnis von 1:20 bis 1:40, insbesondere 1:30 umfassen.

13. Strömungskraftanlage nach Anspruch 11 oder 12, **dadurch gekennzeichnet, dass** das Übersetzungsgetriebe mit einem Synchrongenerator, insbesondere einem permanent erregten Synchrongenerator gekoppelt ist.

14. Strömungskraftanlage nach einem der vorangehenden Patentansprüchen, **dadurch gekennzeichnet, dass** die Funktionskomponenten ein Übersetzungsgetriebe (15, 15', 15", 15"') mit einem Übersetzungsverhältnis von 1:60 bis 1:140, insbesondere 1:70 umfassen.

15. Strömungskraftanlage nach Anspruch 14, **dadurch gekennzeichnet, dass** das Übersetzungsgetriebe (15, 15', 15", 15"') mit einem doppelt gespeisten Asynchrongenerator oder mit einem Synchrongenerator gekoppelt ist.

16. Strömungskraftanlage nach einem der vorangehenden Patentansprüchen, **dadurch gekennzeichnet, dass** ein Getriebe (15"') innerhalb eines Gehäuses des Generators (17"') integriert ist, wobei ein Reaktionsmoment des Getriebes (15"') am Gehäuse des Generators (17"') abgestützt ist.

## Claims

1. Continuous-flow power installation in the Megawatt class, in particular a wind power installation or sea-current power station, for production of electrical power from a fluid flow, having a nacelle, which is mounted such that it can rotate on a base, in particular a tower (3), and has a drive train (7), which converts the energy introduced at the rotor (9) from the fluid flow to electrical energy by means of a rotor (9), which is driven by the fluid flow, and by means of functional components which are in the form of a bearing (13, 13') for the rotor (9) or a rotor shaft (11) and/or a transmission (15, 15') and/or for energy conversion (17), wherein at least one of said functional components (13, 13', 15, 15', 17) represents an operationally fixed link for the transmission of static and dynamic loads from the drive train (7) to the tower (3) and a functional component (13, 13', 15, 15', 17) is mounted on a supporting ring structure (25) of an azimuth bearing (5),
**characterized in that**
the supporting ring structure (25) is provided with an accommodation shell (40) in which at least one torque bearing (13') and the transmission (15') are used as functional components (13, 13', 15, 15', 17), and **in that** attachment means (43) are provided and are used to attach the functional components (13, 13', 15, 15', 17) to one another, and **in that** additional attachment means (42) are provided and are used to connect the functional components (13', 15') used in the accommodation shell (40) to the accommodation shell (40) itself and to the supporting ring (25),
wherein the attachment means (42, 43) result in a stable sustaining unit between the functional components (13, 13', 15, 15', 17), the accommodation shell (40) and the supporting ring structure (25).

2. Continuous-flow power installation according to Claim 1, **characterized in that** at least one auxiliary component (19, 21), in particular a frequency converter (19) for controlling a generator (17) and a supply, brake units, a hydraulic installation and/or superordinate control electronics (21), is arranged in the accommodation shell.

3. Continuous-flow power installation according to one of the preceding patent claims, **characterized in that** the dynamic loads comprise at least one of the following loads: a thrust load in particular from a rotor bearing, bending moments, a torsion load, a torque about the rotor shaft (11), in particular on an input stage of a transmission (15), vibration loads, inertia moments, in particular during rotation of the nacelle in order to vary its azimuth alignment.

4. Continuous-flow power installation according to one of the preceding patent claims, **characterized in that** the housing of a functional component (13, 15) transmits the load which occurs on this functional component to the supporting ring structure (25).

5. Continuous-flow power installation according to one of the preceding patent claims, **characterized in that** a housing of a functional component (13, 15) transmits the load which occurs on an adjacent functional component (15, 17) to the supporting ring structure (25).

6. Continuous-flow power installation according to Claim 4 or 5, **characterized in that** the housing is designed to be weather-resistant.

7. Continuous-flow power installation according to one of the preceding patent claims, **characterized in that** a frame (23) is attached to the housing of a functional component and is used to accommodate additional components, in particular a frequency converter (19), and/or a transformer, and/or a fire protection installation, and/or control electronics (21), and/or an emergency power source and/or a cooling system and/or an air conditioning system.

8. Continuous-flow power installation according to one of Claims 2 to 7, **characterized in that** a front bearing (13) for the rotor (9) or the rotor shaft (11) is attached to the supporting ring structure (25) of the azimuth bearing (5), and **in that** the front bearing (13) is provided with a generator, in particular a ring generator (27), which is driven without any step-up ratio by the rotor (9).

9. Continuous-flow power installation according to Claim 8, **characterized in that** control means are provided for the ring generator (27) and damp torque fluctuations and/or rotation-speed fluctuations which are introduced from the rotor side.

10. Continuous-flow power installation according to one of the preceding patent claims, **characterized in that** attachment means are provided for connection of the housings of at least two functional components (13, 15, 17).

11. Continuous-flow power installation according to one of the preceding patent claims, **characterized in that** the functional components comprise a step-up transmission (15, 15', 15", 15''') with a step-up ratio of 1:3 to 1:10, in particular 1:5 or 1:8.

12. Continuous-flow power installation according to one of the preceding patent claims, **characterized in that** the functional components comprise a step-up transmission (15, 15', 15", 15''') with a step-up ratio of 1:20 to 1:40, in particular 1:30.

13. Continuous-flow power installation according to Claim 11 or 12, **characterized in that** the step-up transmission is coupled to a synchronous generator, in particular to a permanent-magnet synchronous generator.

14. Continuous-flow power installation according to one of the preceding patent claims, **characterized in that** the functional components comprise a step-up transmission (15, 15', 15", 15''') with a step-up ratio of 1:60 to 1:140, in particular 1:70.

15. Continuous-flow power installation according to Claim 14, **characterized in that** the step-up transmission (15, 15', 15", 15''') is coupled to a doubly-fed asynchronous generator or to a synchronous generator.

16. Continuous-flow power installation according to one of the preceding patent claims, **characterized in that** a transmission (15"') is integrated within a housing of the generator (17"'), with a reaction torque of the transmission (15"') being supported on the housing of the generator (17"').

## Revendications

1. Installation exploitant une force de flux de l'ordre du mégawatt, en particulier installation éolienne ou installation exploitant la force des flux marins, pour générer de l'énergie électrique à partir d'un écoulement de fluide, comprenant une nacelle fixée de manière rotative sur un socle, en particulier une tour (3), laquelle nacelle comprend une chaîne cinématique (7) qui convertit, au moyen d'un rotor (9) entraîné par l'écoulement de fluide, et au moyen de composants fonctionnels qui sont réalisés en tant que paliers (13, 13') du rotor (9) ou d'un arbre de rotor (11) et/ou en tant que transmission (15, 15') et/ou pour la conversion d'énergie (17), l'énergie de l'écoulement de fluide introduite au niveau du rotor (9) en énergie électrique, au moins l'un desdits composants fonctionnels (13, 13', 15, 15', 17) constituant une liaison fixe en fonctionnement pour le transfert de charges statiques et dynamiques de la chaîne cinématique (7) à la tour (3) et un composant fonctionnel (13, 13', 15, 15', 17) étant fixé sur une structure de bague porteuse (25) d'un palier azimutal (5),
**caractérisée en ce que**
la structure de bague porteuse (25) est pourvue d'une coque de réception (40) dans laquelle sont insérés au moins un palier à moment (13') et la transmission (15') en tant que composants fonctionnels (13, 13', 15, 15', 17), et
**en ce que** des moyens de fixation (43) sont prévus, lesquels permettent de fixer les uns aux autres les composants fonctionnels (13, 13', 15, 15', 17) et
**en ce que** des moyens de fixation supplémentaires (42) sont prévus, lesquels permettent de connecter les composants fonctionnels (13', 15') insérés dans la coque de réception (40) à la coque de réception (40) elle-même et à la bague porteuse (25),
une unité stable durable étant produite par les moyens de fixation (42, 43) entre les composants fonctionnels (13, 13', 15, 15', 17), la coque de réception (40) et la structure de bague porteuse (25).

2. Installation exploitant une force de flux selon la revendication 1, **caractérisée en ce que** dans la coque de réception est disposé au moins un composant auxiliaire (19, 21), en particulier un convertisseur de fréquence (19), pour commander un générateur (17) et une alimentation, des groupes de freinage, une installation hydraulique et/ou une électronique de commande principale (21).

3. Installation exploitant une force de flux selon l'une quelconque des revendications précédentes, **caractérisée en ce que** les charges dynamiques comprennent au moins l'une des charges suivantes :
une charge de poussée, en particulier d'un palier de rotor, des moments de flexion d'une sollicitation en torsion, un couple de rotation autour de l'arbre de rotor (11), en particulier au niveau d'un étage d'entrée d'une transmission (15), des contraintes de vibrations, des moments d'inertie, en particulier lors de la rotation de la nacelle pour faire varier son orientation azimutale.

4. Installation exploitant une force de flux selon l'une quelconque des revendications précédentes, **caractérisée en ce que** le boîtier d'un composant fonctionnel (13, 15) transfère la force s'exerçant sur ce composant fonctionnel à la structure de bague porteuse (25).

5. Installation exploitant une force de flux selon l'une quelconque des revendications précédentes, **caractérisée en ce qu'**un boîtier d'un composant fonctionnel (13, 15) transfère la charge s'appliquant à un composant fonctionnel adjacent (15, 17) à la structure de bague porteuse (25).

6. Installation exploitant une force de flux selon la revendication 4 ou 5, **caractérisée en ce que** le boîtier est réalisé de manière résistant aux intempéries.

7. Installation exploitant une force de flux selon l'une quelconque des revendications précédentes, **caractérisée en ce qu'**un cadre (23) est fixé au boîtier d'un composant fonctionnel, lequel sert à recevoir des composants supplémentaires, en particulier un convertisseur de fréquence (19), et/ou un transformateur, et/ou une installation de protection contre les incendies, et/ou une électronique de commande (21) et/ou une source d'énergie de secours et/ou un système de refroidissement et/ou un système de traitement d'air.

8. Installation exploitant une force de flux selon l'une quelconque des revendications 2 à 7, **caractérisée en ce qu'**un palier avant (13) pour le rotor (9) ou l'arbre de rotor (11) est fixé à la structure de bague porteuse (25) du palier azimutal (5) et **en ce que** le palier avant (13) est pourvu d'un générateur entraîné sans démultiplication par le rotor (9), en particulier un générateur en anneau (27).

9. Installation exploitant une force de flux selon la revendication 8, **caractérisée en ce que** des moyens de commande pour le générateur en anneau (27) sont prévus, lesquels provoquent un amortissement des oscillations de couple ou des oscillations de vitesse de rotation introduites du côté du rotor.

10. Installation exploitant une force de flux selon l'une quelconque des revendications précédentes, **caractérisée en ce que** des moyens de fixation sont prévus pour connecter les boîtiers d'au moins deux composants fonctionnels (13, 15, 17).

11. Installation exploitant une force de flux selon l'une quelconque des revendications précédentes, **caractérisée en ce que** les composants fonctionnels comprennent une transmission à réducteur (15, 15', 15", 15''') avec un rapport de démultiplication de 1:3 à 1:10, en particulier de 1:5 ou 1:8.

12. Installation exploitant une force de flux selon l'une quelconque des revendications précédentes, **caractérisée en ce que** les composants fonctionnels comprennent une transmission à réducteur (15, 15', 15", 15''') avec un rapport de démultiplication de 1:20 à 1:40, en particulier de 1:30.

13. Installation exploitant une force de flux selon la revendication 11 ou 12, **caractérisée en ce que** le réducteur est accouplé à un générateur synchrone, en particulier un générateur synchrone à excitation permanente.

14. Installation exploitant une force de flux selon l'une quelconque des revendications précédentes, **caractérisée en ce que** les composants fonctionnels comprennent une transmission à réducteur (15, 15', 15", 15''') avec un rapport de réduction de 1:60 à 1:140, en particulier de 1:70.

15. Installation exploitant une force de flux selon la revendication 14, **caractérisée en ce que** la transmission à réducteur (15, 15', 15", 15''') est accouplée à un générateur asynchrone à alimentation double ou à un générateur synchrone.

16. Installation exploitant une force de flux selon l'une quelconque des revendications précédentes, **caractérisée en ce qu'**une transmission (15"') est intégrée à l'intérieur d'un boîtier du générateur (17'"), un couple de réaction de la transmission (15"') étant supporté sur le boîtier du générateur (17'").
